(19) Europäisches Patentamt
European Patent Office
Office européen des brevets

(11) Publication number: **0 371 680 B1**

(12) # EUROPEAN PATENT SPECIFICATION

(45) Date of publication of patent specification: **22.12.93**

(51) Int. Cl.$^5$: **C08G 18/65**

(21) Application number: **89312087.3**

(22) Date of filing: **21.11.89**

The file contains technical information submitted after the application was filed and not included in this specification

(54) **Method for preparing polyurea-polyurethane flexible foams.**

(30) Priority: **25.11.88 GB 8827589**
**17.10.89 GB 8923354**

(43) Date of publication of application:
**06.06.90 Bulletin 90/23**

(45) Publication of the grant of the patent:
**22.12.93 Bulletin 93/51**

(84) Designated Contracting States:
**AT BE CH DE ES FR GB GR IT LI NL SE**

(56) References cited:
**EP-A- 0 075 130**
**EP-A- 0 180 758**
**FR-A- 1 448 751**
**US-A- 3 977 989**
**US-A- 4 722 942**

(73) Proprietor: **IMPERIAL CHEMICAL INDUSTRIES PLC**
**Imperial Chemical House,**
**Millbank**
**London SW1P 3JF(GB)**

Proprietor: **ATLAS EUROPOL SpA**
**Via Mazzini 58**
**I-21020 Ternate VA(IT)**

(72) Inventor: **Frigo, Roberto**
**Via Oldefredi 27**
**I-21110 Varese(IT)**
Inventor: **Bagaglio, Gian-Carlo**
**Via Londonio 2**
**I-21110 Varese(IT)**
Inventor: **Verhelst, Gabriel**
**Mechelsesteenweg 667**
**B-3020 Herent(BE)**
Inventor: **de Witte, Mireille**
**H. Persoonsstraat 76**
**B-9291 Gent(BE)**

(74) Representative: **Leherte, Georges Maurice Lucien Marie et al**
**ICI Group Patents Services Dept.**
**PO Box 6**
**Shire Park**
**Bessemer Road**
**Welwyn Garden City Herts. AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 371 680 B1

## Description

The invention relates to the manufacture of polyurethane and/or polyurea flexible foams.

The manufacture of polyurethane/polyurea flexible foams is well known in the art and methods for their preparation have been fully described in the literature.

It is known to manufacture flexible polyurethane foams by reacting isocyanate with isocyanate-reactive compositions containing high molecular weight compounds, in the presence of blowing agents.

It is also known to include in the isocyanate-reactive composition a chain extender, such as 1,4 butane diol, alone or in admixture with phenyldiethanolamine or aromatic polyamines.

Thus GB 2041387 describes the manufacture of microcellular flexible PU foams by reacting isocyanate with a high molecular weight polyether polyol and a mixture of 1,4 butane diol and phenyldiethanolamine, the amount of those low molecular weight compounds ranging from 0.2 % to 40 % by weight of polyether polyol.

The use of relatively high amounts of aromatic diamines as chain extenders for free rise or sprayed polyurethane/polyurea foams has also been disclosed, in EP 177766. US 3977989 discloses a process for preparing flexible foams using triethanolamine, aromatic diamine and aromatic polyamine as curing agent in an amount of about 2 to about 10% by weight on polyol used.

US 4722942 discloses an active-hydrogen-containing composition for preparing flexible foams the composition comprising a specified polyol and about 0.5 to about 5 parts per 100 parts of polyol of ethanolamine, diethanolamine, triethanolamine, monoisopropanolamine, diisopropanolamine, methylene bis-(o-chloroaniline) and mixtures; and a flame retardant.

EP 180758 discloses a process for preparing mouldings according to the RIM process using 5-50 parts of DETDA per 100 parts of polyol. The mouldings have a density of 700 kg/$m^3$ or more.

It has now been found that flexible polyurethane/polyurea foams, having improved mechanical properties and reduced densities, can be obtained by reacting isocyanate with a high Mw isocyanate-reactive compound and reduced amounts of a low Mw amino chain extender or with a mixture of at least 2 chain extenders wherein at least one is an amino chain extender.

Thus, according to the present invention there is provided a method to prepare polyurethane and/or polyurea flexible foams which comprises reacting :

A. an organic polyisocyanate composition;

B. at least one isocyanate-reactive compound (B) having a Mw of 1000 to 10000;

$C_1$. an 80:20 (w/w) mixture of 3,5-diethyl-2,4-diaminotoluene and 3,5-diethyl-2,6-diaminotoluene, in an amount of not more than 1% by wt of high Mw isocyanate-reactive compound(s) (B);

or

$C_2$. a mixture of an 80:20 (w/w) mixture of 3,5-diethyl-2,4-diaminotoluene and 3,5-diethyl-2,6-diaminotoluene in an amount of not more than 1% by wt of high Mw isocyanate-reactive compound(s) (B) and another chain extender having a molecular weight below 1000 and being selected from diamines, aminoalcohols and polyols, said mixture being used in an amount of 0.1% to 10% by wt of high Mw isocyanate-reactive compound(s) (B);

D. $H_2O$ used in an amount of at least 1.5% by wt of the isocyanate-reactive compound (B);

E. optionally catalysts;

F. optionally further blowing agents which are different from $H_2O$; and

G. optionally further conventional additives.

Polyisocyanate compositions which may be reacted with the isocyanate-reactive compositions of the invention may include any of the aliphatic, cyclo-aliphatic, araliphatic or aromatic polyisocyanates known in polyurethane or polyurea chemistry, especially those that are liquid at room temperature.

Examples of suitable polyisocyanates include 1,6-hexamethylene diisocyanate, isophorone diisocyanate, cyclohexane-1,4-diisocyanate, 4,4'-dicyclohexylmethane diisocyanate, 1,4-xylylene diisocyanate, 1,4-phenylene diisocyanate, 2,4-toluene diisocyanate, 2,6-toluene diisocyanate, 2,4'-diphenylmethane diisocyanate, polymethylene polyphenylene polyisocyanates (crude MDI) and 1,5-naphthylene diisocyanate. Mixtures of polyisocyanates can be used and also polyisocyanates which have been modified by the introduction of urethane, allophanate, urea, biuret, carbodiimide, uretonimine or isocyanurate residues.

In general, the aromatic polyisocyanates are preferred, especially the available MDI isomers, that is to say 4,4'-diphenylmethane diisocyanate, 2,4'-diphenylmethane diisocyanate and mixtures thereof. MDI variants such as uretonimine-modified MDI and MDI prepolymers are also of great value in the moulding process.

Suitable high molecular weight isocyanate-reactive compounds preferably have molecular weight 1000-7000.

Their functionality should range from 2-6, preferably 2-4.

Typical high molecular weight isocyanate-reactive compounds include polyols, polyamines, imino-functional compounds and mixtures thereof.

Suitable polyols and methods for their preparation have been fully described in the prior art and, as example of such polyols, there may be mentioned polyesters, polyesteramides, polythioethers, polycarbonates, polyacetals, polyolefins, polysiloxanes and, especially, polyethers.

Polyether polyols which may be used include polyoxyalkylene polyether polyols obtained by the polymerisation of a cyclic oxide, for example ethylene oxide, propylene oxide or tetrahydrofuran in the presence, where necessary, of polyfunctional initiators. Suitable initiator compounds contain a plurality of active hydrogen atoms and include water and polyols, for example ethylene glycol, propylene glycol, diethylene glycol, cyclohexane dimethanol, resorcinol, bisphenol A, glycerol, trimethylolpropane, 1,2,6-hexanetriol, pentaerythritol or sorbitol. Mixtures of initiators and/or cyclic oxides may be used.

Especially useful polyether polyols include polyoxypropylene diols and triols and poly(oxyethylene-oxypropylene) diols and triols obtained by the simultaneous or sequential addition of propylene and ethylene oxides to di- or trifunctional initiators as fully described in the prior art. Mixtures of the said diols and triols can be particularly useful. Other useful polyether polyols include polytetramethylene glycols obtained by the polymerisation of tetrahydrofuran.

Polyester polyols which may be used include hydroxyl-terminated reaction products of polyhydric alcohols such as ethylene glycol, propylene glycol, diethylene glycol, 1,4-butanediol, bis(hydroxyethyl) terephthalate, glycerol, trimethylolpropane, pentaerythritol or polyether polyols or mixtures of such polyhydric alcohols, and polycarboxylic acids, especially dicarboxylic acids or their ester-forming derivatives, for example succinic, glutaric and adipic acids or their dimethyl esters, sebacic acid, phthalic anhydride, or its derivatives such as tetrachlorophthalic or tetrabromophthalic anhydride or dimethyl terephthalate or mixtures thereof. Polyesteramides may be obtained by the inclusion of aminoalcohols such as ethanolamine in polyesterification mixtures. Polyesters obtained by the polymerisation of lactones, for example caprolactone, in conjunction with a polyol, may also be used.

Polythioether polyols which may be used include products obtained by condensing thiodiglycol either alone or with other glycols, alkylene oxides, dicarboxylic acids, formaldehyde, amino-alcohols or aminocarboxylic acids.

Polycarbonate polyols which may be used include products obtained by reacting diols such as 1,3-propanediol, 1,4-butanediol, 1,6-hexanediol, diethylene glycol or tetraethylene glycol with diaryl carbonates, for example diphenyl carbonate, or with phosgene.

Polyacetal polyols which may be used include those prepared by reacting glycols such as diethylene glycol, triethylene glycol or hexanediol with formaldehyde. Suitable polyacetals may also be prepared by polymerising cyclic acetals.

Suitable polyolefin polyols include hydroxy-terminated butadiene homo- and copolymers and suitable polysiloxane polyols include polydimethylsiloxane diols and triols.

Other suitable polyol compositions which can be used include for example polyhydroxyl derivatives which contain high molecular polyaddition or polycondensation polymers in dispersed or soluble state. Such polyhydroxyl derivatives can for example be obtained by carrying out a polyaddition reaction (for instance between polyisocyanates and amino-functional compounds) or a polycondensation reaction (for instance between formaldehyde and phenols and/or amines) in situ in such polyols as already disclosed above. Suitable are also polyhydroxyl derivative modified by vinyl-polymerisation, such as for example obtained by polymerising styrene and acrylonitrile in the presence of polyether polyols or polycarbonate polyols.

Other useful isocyanate-reactive polymers include polymeric polyamines, especially diamines and triamines, corresponding to the above described polymeric polyols. Suitable polyamines include products obtained by the reductive amination of polyether polyols as described, for example, in U.S. Patent 3,654,370 or by the cyanoethylation of polyols followed by hydrogenation. Polyoxyalkylene polyether polyamines like polyoxypropylene diamines and triamines and mixtures thereof are preferred. Also useful are polymers containing both amino and hydroxyl groups obtained by the partial amination of polyols.

Imino-functional compounds which may be used are imino-functional compounds capable of reacting directly with polyisocyanates without prior cleavage of the C=N bond to form a monomeric byproduct. Suitable imino-functional compounds include imino-functional polyether resins.

"Imino-functional" as used herein means that a reactant contains the grouping :

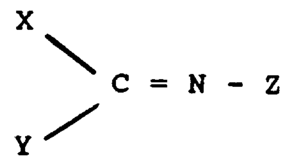

wherein X, Y and Z are chemical moieties which collectively form the rest of said compound and are each independently selected from hydrogen and organic radicals which are attached to the imino unit :

C = N-

of said compound through N, C, O, S, Si or P, the central carbon atom of said imino unit being bonded to three atoms.

In the above structure, neither the carbon nor the nitrogen atom of the imino unit should be incorporated within an aromatic or other fully conjugated ring or ring system. It is preferred that Z is attached to the imino unit through saturated atoms, preferably aliphatic carbon atoms.

The range of imino-functional reagents which may be used in the invention is not limited by or to any particular chemistry of the preparation of said reagents. For example, imine terminated aliphatic polyethers may be made by a number of different routes. Specifically, the amine groups ($-NH_2$) of an aliphatic amine-terminated polyether can be prereacted with an aldehyde ($XCH_2CHO$) or a ketone (X-CO-Y), to form, respectively, the corresponding aldimine

$-N=CHCH_2X$

or the corresponding ketimine

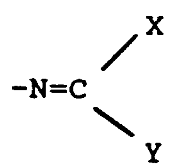

or the aldehyde and/or ketone group of an aldehyde and/or ketone-terminated polyether, can be prereacted with an aliphatic primary mono-amine to form, respectively, the corresponding aldimine and/or ketimine-terminated polyethers:

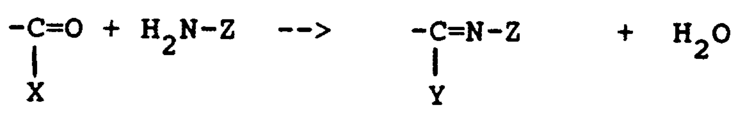

The preparation of imino functional groups in both cyclic and acyclic forms is well known in the literature, such as from "The Chemistry of the Carbon-Nitrogen Double Bond", Ed. S. Patai, Interscience Publishers, London, 1970 and references therein.

Enamine-containing compounds which may be present include compounds having the structures :

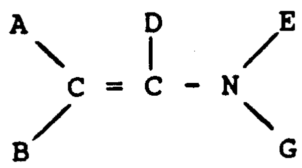

or

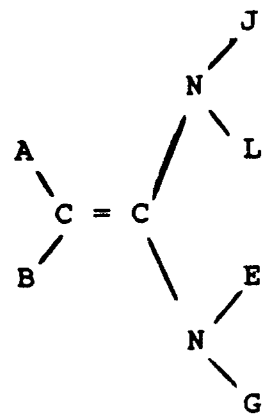

wherein each of A, B, D, E, G, J and L, independently, represents hydrogen or, preferably, an optionally substituted hydrocarbon radical, any of A, B and D and, independently, any of E, G, J and L optionally being joined together to form one ore more carbocyclic or heterocyclic rings.

In many preferred enamine-functional compounds E, G, J and L are not hydrogen. It is also preferred that not both of A and B are hydrogen. Especially useful enamino-functional compounds contain two or more enamine groups as a result of any of A, B, D, E, G, J and/or L being a radical terminating in one or more enamino groups.

Suitable enamino-functional compounds may be obtained in known manner by reacting a carbonyl compound containing at least one alpha-hydrogen atom, for example an aliphatic, cyclo-aliphatic or araliphatic aldehyde or ketone such as acetaldehyde, propionaldehyde, isobutyraldehyde, caproaldehyde, cyclohexylaldehyde, acetone, methyl ethyl ketone, benzyl methyl ketone, cyclopentanone, cyclohexanone, trimethylcyclohexanone, mixtures of these and the like with a secondary amine, for example a secondary amino-terminated polymer such as a polyether.

Mixtures of isocyanate-reactive polymers may be used. Such mixtures may contain components differing in respect of molecular weight, functionality, nature of isocyanate-reactive groups or polymer backbone.

Particularly preferred amounts of the 80:20 (w/w) mixture of 3,5-diethyl-2,4-diamino-toluene and 3,5-diethyl-2,6-diamino-toluene (DETDA) should range from 0.2 % to 0.8 % by wt of isocyanate-reactive compound(s) (B).

Suitable additional chain-extenders are selected from diamines, aminoalcohols and polyols having a molecular weight preferably in the range of 60 to below 1000.

Suitable diamine chain extenders used in this invention are isophorone diamine (1-amino-3-amino-3,5,5-trimethyl cyclohexane), fully hydrogenated di(aminophenyl)methane, piperazine, hydrogenated methylene dianiline, diamino menthane, and hydrogenated toluene diamine. The most useful of these are those that are liquids below about 110 °C.

It is preferred to use aromatic diamines which have at least one linear alkyl substituent in ortho position to the one amino group and two linear alkyl substituents, preferably with 1 to 3 carbon atoms, in both ortho positions of the other amino group. Most preferred are those diamines which have an alkyl substituent in all ortho positions to both amino groups.

Examples of aromative diamine chain extenders include toluenediamine including 2,4- and 2,6-diaminotoluenes; 2,5-diaminoxylene; 1,3-diethyl-2,4-diaminobenzene; 1,3-dimethyl- 2,4-diaminobenzene; 2,4-diaminomesitylene; 1-ethyl- 2,6-diaminobenzene; 1,3,5-triethyl-2,6-diaminobenzene; 3,5,3',5'-tetraethyl-4,4'-diaminodiphenylmethane; 2,6-diethylnaphthylene-1,5-diamine; 2-ethyl-1,3-diaminobenzene; 4,4'-diaminodiphenylmethane; 1,2-, 1,3- or 1,4-phenylene diamine; 2,4'- or 4,4'-diaminodiphenylmethane; naphthylene-1,5-diamine; triphenylmethane-4,4'-4"-triamine. A more preferred compound is 1,3,5-triethyl-2,6- diaminobenzene.

Examples of suitable amino alcohols are ethanolamine, diethanolamine, isopropanolamine, bis(2-hydroxyethyl)- and bis(2-hydroxy-propyl) aniline, and bis alkanol derivatives of piperazine or 2-methyl-piperazine.

Suitable polyols having molecular weights below 1000 include aliphatic diols and triols such as 1,4-butanediol, 1,6-hexanediol, ethylene-, diethylene-, and dipropylene glycol, neopentyl glycol, as well as low molecular weight adducts of propylene oxide of trimethylolpropane and glycerol as well as simple

polyhydric alcohols such as trimethylolpropane, glycerol and 1,2,6-hexanetriol.

Aromatic cycloaliphatic and heterocyclic diols can also be used and include 1,4-bis(hydroxyethyl) hydro-quinone, bis(hydroxyethyl)- and bis(2-hydroxypropyl) bisphenol A, hydrogenated bisphenol A(2,2-bis-(4-hydroxycyclohexyl) propane, cyclohexane 1,4-diol, and 1,4-bis(hydroxyethyl) piperazine. Bis(2-hydroxypropyl)isophthalate (Arco Chemical Co.) and bis(2-hydroxyethyl) carbamate (Jefferson Chemical Co.) can also be used, as can low molecular weight, hydroxyl-terminated polyesters, including poly(caprolactones).

The amount of $H_2O$ to be used in the present invention should be of at least 1.5 % by weight of high Mw isocyanate-reactive compound(s) (B).

Preferably, the amount of $H_2O$ used should not exceed 10 % by wt of high Mw isocyanate-reactive compound(s) (B). More preferably, the amount of $H_2O$ used should range from 2.5 % to 6 % most preferably from 2.5 % to 5 % by wt of high Mw isocyanate-reactive compound(s) (B).

It is a particular aspect of the present invention to provide flexible foams which are mainly water-blown and substantially halocarbon-free. However, additional amounts of inert physical blowing agents may be used.

Suitable blowing agents which may be used include dissolved or dispersed gases such as air, $CO_2$ or $N_2$ which may be injected or may be generated in situ by a chemical reaction or by the vaporisation of volatile liquids. Further suitable blowing agents may be inert liquids having boiling points not exceeding 100 °C, preferably not exceeding 50 °C, at atmospheric pressure. As examples of such liquids, there may be mentioned hydrocarbons, chlorinated hydrocarbons, fluorinated hydrocarbons and chlorofluorocarbons.

In addition to the ingredients already mentioned, the foam forming reaction mixture may contain one or more other conventional ingredients of such reaction mixtures. As examples of other such optional ingredients, there may be mentioned catalysts, surfactants, foam stabilisers, fire retardants, fillers, dyes, pigments and internal mould release agents.

Catalysts which may be used include materials already proposed as catalysts for isocyanate-based foam systems, for example tertiary amines, tin compounds and alkali metal salts of carboxylic acids.

Surfactants and foam stabilisers which may be used include siloxane-oxyalkylene copolymers.

Suitable surfactants also include, for example, sodium salts of castor oil sulfonates; alkali metal or ammonium salts of sulfonic acids such as dodecyl benzene sulfonic acid; and polyether siloxanes having a structure such that a copolymer of ethylene oxide and propylene oxide is attached to a polydimethyl siloxane radical. The amount of surfactant used is less than about 2 percent by weight of the total reactants, preferably less than 1%.

The method of the invention provides advantages in respect of foam properties. It is a further advantage of the present method to provide processing flexibility, mainly by allowing the coverage of a broad range of isocyanate indices. This provides the possibility to cover a broad range of hardness values for the foamed end-products, while retaining their good physical properties, without varying the density of the foams. Thus, according to the present method, the isocyanate indices may vary from 40 to 120, preferably from 50 to 100, most preferably from 60 to 90.

The method of the invention may be performed to produce moulded or slabstock foams, by mixing the components in any convenient manner, continuously or discontinuously.

It is a particular advantage of the invention to provide moulded foams having good physical properties, by using reduced amounts of only DETDA.

The invention is illustrated but not limited by the following Examples :

Example 1

Flexible polyurethane/polyurea foams were prepared by mixing together, under foam-forming conditions, an isocyanate composition consisting of a mixture comprising polymethyl polyphenylene polyisocyanate having an NCO content of 30.6 % (referred to as polymeric MDI) and a glycol modified MDI containing 20 % 2,4' MDI (of NCO content 26.85 %) with isocyanate-reactive compositions outlined in Table 1 below.

The reaction mixture was stirred for 6 sec. at room temperature at about 5000 rpm.

The proportions used, foaming conditions and foam densities are described in Table 2.

**Table 1**

| **Ingredients** (parts by weight) | Compositions 1a | 1b | 1c | 1d | 1e | 1f | 1g | 1h |
|---|---|---|---|---|---|---|---|---|
| Polyethyleneoxide/polypropylene oxide polyether triol (17 % ethylene oxide tipped) having a OH number of 35 | 80.0 | 80.0 | 80.0 | 80.0 | 80.0 | 80.0 | 80.0 | 80.0 |
| Polyethyleneoxide/polypropylene oxide polyether diol (15 % ethylene oxide tipped) having a OH number of 28 | 20.0 | 20.0 | 20.0 | 20.0 | 20.0 | 20.0 | 20.0 | 20.0 |
| DABCO catalyst (a 33 % solution of triethylene diamine in dipropylene glycol) marketed by Air Products Inc. | 1.0 | 1.0 | 1.0 | 1.0 | 1.0 | 1.0 | 1.0 | 1.0 |
| NIAX® C 174 catalyst (a 30 % solution of a tertiary amine catalyst in dipropylene glycol) supplied by Union Carbide | 0.2 | 0.2 | 0.2 | 0.2 | 0.2 | 0.2 | 0.2 | 0.2 |
| A silicon surfactant supplied by Th. Goldschmidt as Tegostab® B 4113 | 0.5 | 0.5 | 0.5 | 0.5 | 0.5 | 0.5 | 0.5 | 0.5 |
| Diethyl toluene diamine (DETDA) | 1.0 | 1.0 | 1.0 | 1.0 | 1.0 | 0.5 | 1.0 | 1.0 |
| Diethanol amine (DELA) | 0.5 | 1.0 | 1.5 | 2.0 | - | - | - | - |
| Monoethanol amine (MELA) | - | - | - | - | 0.5 | - | - | - |
| Isophorone diamine | - | - | - | - | - | 0.5 | 0.7 | 0.7 |
| 1,4 butane diol | - | - | - | - | - | - | - | 0.1 |
| $H_2O$ | 3.4 | 3.4 | 3.4 | 3.4 | 3.4 | 3.4 | 3.4 | 3.4 |

Table 2

| Foams | I | II | III | IV | V | VI | VII | VIII |
|---|---|---|---|---|---|---|---|---|
| Ingredients (parts by weight) | | | | | | | | |
| Isocyanate composition | 64 | 64 | 64 | 64 | 64 | 64 | 64 | 64 |
| Isocyanate-reactive compositions : | | | | | | | | |
| 1a | 100 | | | | | | | |
| 1b | | 100 | | | | | | |
| 1c | | | 100 | | | | | |
| 1d | | | | 100 | | | | |
| 1e | | | | | 100 | | | |
| 1f | | | | | | 100 | | |
| 1g | | | | | | | 100 | |
| 1h | | | | | | | | 100 |
| Foaming conditions | | | | | | | | |
| Cream time (s) | 9 | 9 | 8 | 7 | 9 | 12 | 10 | 8 |
| String time (s) | 70 | 60 | 50 | 45 | 60 | 90 | 70 | 45 |
| End of rise time (s) | 85 | 80 | 70 | 65 | 90 | 110 | 90 | 75 |
| Density ($kg/m^3$) | 39.9 | 39.7 | 42.6 | 46 | 37 | 36 | 36 | 33.6 |

Example 2

Flexible polyurethane/polyurea foams were prepared - as described in Example 1 - by mixing together under foam-forming conditions, an isocyanate blend having an NCO content of 26.7 %, containing 80 % of

an isocyanate composition supplied by ICI PLC under the commercial name SUPRASEC® VM28, and 20 % of an MDI composition comprising 20 % of 2,4'MDI, supplied by ICI PLC under the name SUPRASEC® ML, with isocyanate-reactive compositions 2a, 2b, 2c, 2d outlined in Table 3 herebelow, at an isocyanate index of 78.

The foaming conditions and foam properties are described in Table 4 herebelow.

Results clearly indicate that the use of DETDA in amounts below 1 % by wt leads to foams showing good physical/structural properties, while formulations having no DETDA or more than 1 % by wt of DETDA per 100 parts of polyol are giving foams showing poor structural properties.

It further appears from column IId of Table 4 that the use of more than 1 % by wt of DETDA resulted in inferior processing characteristics (e.g. strong reduction in string time).

Table 3

| Ingredients (parts by weight) | compositions | | | |
|---|---|---|---|---|
| | 2a (comparative) | 2b | 2c | 2d (comparative) |
| Trifunctional ethylene oxide tipped polyether polyol (17 % EO-tipped) of OH number 35 | 100.0 | 100.0 | 100.0 | 100.0 |
| NIAX® C-174 | 0.1 | 0.1 | 0.1 | 0.1 |
| X-8154 (a urethane-promoting catalyst supplied by Air Products Inc.) | 0.5 | 0.5 | 0.5 | 0.5 |
| DMAPA (an amino-catalyst supplied by BASF AG) | 0.2 | 0.2 | 0.2 | 0.2 |
| B 4113 | 1.0 | 1.0 | 1.0 | 1.0 |
| WATER | 4.0 | 4.0 | 4.0 | 4.0 |
| DETDA | 0.0 | 0.4 | 0.8 | 1.2 |

Table 4

| Foams | IIa (comparative) | IIb | IIc | IId (comparative) |
|---|---|---|---|---|
| Ingredients | | | | |
| Isocyanate composition of NCO content 26.7 % | X | X | X | X |
| Isocyanate-reactive compositions | 2a | 2b | 2c | 2d |
| Isocyanate index | 78 | 78 | 78 | 78 |
| Foaming conditions | | | | |
| Cream time (sec) | 11-12 | 10-11 | 10 | 9 |
| String time (sec) | 63 | 59 | 57 | 47 |
| End of rise time (sec) | 73 | 71 | 71 | 68 |
| Foam properties | | | | |
| % recession | 30 % | 22 % | 22 % | 30 % |
| Structure | Internal collapse | Suitable foams | Suitable foams | Bad skin |

## Claims

**1.** A method to prepare polyurethane and/or polyurea flexible foams which comprises reacting :

A. an organic polyisocyanate composition;

B. at least one isocyanate-reactive compound (B) having a Mw of 1000 to 10000;

$C_1$. an 80:20 (w/w) mixture of 3,5-diethyl-2,4-diaminotoluene and 3,5-diethyl-2,6-diaminotoluene, in an amount of not more than 1% by wt of high Mw isocyanate-reactive compound(s) (B);

or

$C_2$. a mixture of an 80:20 (w/w) mixture of 3,5-diethyl-2,4-diaminotoluene and 3,5-diethyl-2,6-diaminotoluene in an amount of not more than 1% by wt of high Mw isocyanate-reactive compound-

(s) (B) and another chain extender having a molecular weight below 1000 and being selected from diamines, aminoalcohols and polyols, said mixture being used in an amount of 0.1% to 10% by wt of high Mw isocyanate-reactive compound(s) (B);
D. $H_2O$ used in an amount of at least 1.5% by wt of the isocyanate-reactive compound (B);
E. optionally catalysts;
F. optionally further blowing agents which are different from $H_2O$; and
G. optionally further conventional additives.

**2.** A method according to claim 1, wherein the high molecular weight isocyanate-reactive compound(s) (B) has/have a functionality of 2-4, and are selected from polyoxyalkylene polyether polyols and polyoxyalkylene polyether polyamines.

**3.** A method according to any one of the preceding claims wherein there is used $H_20$ in an amount of 1.5% to 10% by wt of high Mw isocyanate-reactive compound(s) (B).

**4.** A method according to claim 3 wherein there is used $H_20$ in an amount of 2.5% to 6% by weight of high Mw isocyanatereactive compound(s) (B).

**5.** A method according to any one of the preceding claims wherein the isocyanate composition (A), the isocyanate-reactive compound(s) (B) and $H_20$ are used in such amounts to provide an isocyanate index ranging from 40 to 120.

**6.** A method according to claim 8 wherein there is provided an isocyanate index ranging from 50 to 100.

## Patentansprüche

**1.** Verfahren zur Herstellung von Polyurethan- und/oder Polyharnstoff-Weichschäumen, umfassend die Umsetzung von:
A: einer organischen Polyisocyanatzusammensetzung;
B: mindestens einer isocyanat-reaktiven Verbindung (B)
mit einem Molekulargewicht von 1000 bis 10000;
$C_1$: einer 80:20 (w/w) Mischung aus 3,5-Diethyl-2,4-diaminotoluol und 3,5-Diethyl-2,6-diaminotoluol in einer Menge von nicht mehr als 1 Gew.-% der isocyanat-reaktiven Verbindung(en) (B) mit hohem Molekulargewicht;
oder
$C_2$: einer Mischung einer 80:20 (w/w) Mischung aus 3,5-Diethyl-2,4-diaminotoluol und 3,5-Diethyl-2,6-diaminotoluol in einer Menge von nicht mehr als 1 Gew.-% der isocyanat-reaktiven Verbindung(en) (B) mit hohem Molekulargewicht und eines weiteren Kettenerweiterungsmittels mit einem Molekulargewicht unter 1000 und ausgewählt aus Diaminen, Aminoalkoholen und Polyolen, wobei die Mischung in einer Menge von 0,1 bis 10 Gew.-% der isocyanatreaktiven Verbindung(en) (B) mit hohem Molekulargewicht verwendet wird;
D: $H_2O$ in einer Menge von mindestens 1,5 Gew.-% der isocyanat-reaktiven Verbindung (B);
E: gegebenenfalls Katalysatoren;
F: gegebenenfalls ferner andere Blähmittel außer $H_2O$; und
G: gegebenenfalls ferner herkömmliche Zusätze.

**2.** Verfahren nach Anspruch 1 **dadurch gekennzeichnet,** daß die isocyanat-reaktive(n) Verbindung(en) (B) mit hohem Molekulargewicht eine Funktionalität von 2 bis 4 hat/haben und ausgewählt wird/werden aus Polyoxyalkylenpolyether-Polyolen und Polyoxyalkylenpolyether-Polyaminen.

**3.** Verfahren nach einem der vorstehenden Ansprüche **dadurch gekennzeichnet,** daß Wasser in einer Menge von 1,5 bis 10 Gew.-% der isocyanat-reaktiven Verbindung(en) (B) mit hohem Molekulargewicht verwendet wird.

**4.** Verfahren nach Anspruch 3 **dadurch gekennzeichnet,** daß Wasser in einer Menge von 2,5 bis 6 Gew.-% der isocyanat-reaktiven Verbindung(en) (B) mit hohem Molekulargewicht verwendet wird.

5. Verfahren nach einem der vorstehenden Ansprüche **dadurch gekennzeichnet,** daß die Isocyanat-Zusammensetzung (A), die isocyanat-reaktive(n) Verbindung(en) (B) und Wasser in einer Menge verwendet werden, daß ein Isocyanatindex im Bereich von 40 bis 120 zur Verfügung gestellt wird.

6. Verfahren nach Anspruch 5, **dadurch gekennzeichnet,** daß ein Isocyanatindex im Bereich von 50 bis 100 zur Verfügung gestellt wird.

## Revendications

1. Procédé de production de mousses flexibles de polyuréthanne et/ou polyurée, qui comprend la réaction :

   A. d'une composition de polyisocyanate organique ;

   B. d'au moins un composé (B) réactif vis-à-vis d'un isocyanate ayant une valeur $M_p$ de 1000 à 10 000 ;

   $C_1$. d'un mélange à 80:20 (en poids/poids) de 3,5-diéthyl-2,4-diaminotoluène et de 3,5-diéthyl-2,6-diaminotoluène, en une quantité ne dépassant pas 1 % en poids de composé(s) (B) réactif(s) vis-à-vis d'un isocyanate de valeur $M_p$ élevée ;

   ou

   $C_2$. d'un mélange formé d'un mélange à 80:20 (en poids/poids) de 3,5-diéthyl-2,4-diaminotoluène et de 3,5-diéthyl-2,6-diaminotoluène en une quantité ne dépassant pas 1 % en poids de composé(s) (B) réactif(s) vis-à-vis d'un isocyanate, de valeur $M_p$ élevée et d'un autre agent d'allongement de chaîne ayant un poids moléculaire inférieur à 1000 et étant choisi entre des diamines, des amino-alcools et des polyols, ledit mélange étant utilisé en une quantité de 0,1 à 10 % en poids de composé(s) (B) réactif(s) vis-à-vis d'un isocyanate, de valeur $M_p$ élevée ;

   D. d'eau utilisée en une quantité d'au moins 1,5 % en poids du composé (B) réactif vis-à-vis d'un isocyanate ;

   E. facultativement de catalyseurs ;

   F. facultativement d'autres agents porogènes qui sont différents de $H_2O$ ; et

   G. facultativement d'autres additifs classiques.

2. Procédé suivant la revendication 1, dans lequel le ou les composés de haut poids moléculaire réactifs vis-à-vis d'un isocyanate ont une fonctionnalité de 2 à 4 et sont choisis entre des polyoxyalkylène-polyéther-polyols et des polyoxyalkylène-polyéther-polyamines.

3. Procédé suivant l'une quelconque des revendications précédentes, dans lequel on utilise de l'eau en une quantité de 1,5 à 10 % en poids du ou des composés (B) de valeur $M_p$ élevée réactifs vis-à-vis d'un isocyanate.

4. Procédé suivant la revendication 3, dans lequel on utilise de l'eau en une quantité de 2,5 à 6 % en poids du ou des composés (B) de valeur $M_p$ élevée réactifs vis-à-vis d'un isocyanate.

5. Procédé suivant l'une quelconque des revendications précédentes, dans lequel la composition d'isocyanate (A), le ou les composés (B) réactifs vis-à-vis d'un isocyanate et l'eau sont utilisés en quantités offrant un indice d'isocyanate dans la plage de 40 à 120.

6. Procédé suivant la revendication 8, dans lequel est établi un indice d'isocyanate allant de 50 à 100.